# EUROPEAN PATENT SPECIFICATION

(11) **EP 2 509 800 B1**
(45) Date of publication and mention of the grant of the patent: **19.11.2014**
(21) Application number: 10809035.8
(22) Date of filing: 09.12.2010
(51) Int. Cl.: B60C 1/00, C08K 5/17, C09J 121/02, C08J 5/12, C08L 21/00

(54) **METHOD FOR PREPARING IMPERMEABLE RUBBER LAYERS**
HERSTELLUNGPROZESS FÜE UNDURCHLAESSIGE KAUTSCHUKSCHICHTEN
PROCÉDÉ DE PREPARATION POUR COUCHES DE CAOUTCHOUC IMPERMÉABLES

(30) Priority: 09.12.2009 IT TO20090966
(43) Date of publication of application: 17.10.2012
(73) Proprietor: Bridgestone Corporation, Chuo-ku Tokyo 104-8340 (JP)
(72) Inventor: COTUGNO, Salvatore, I-00131 Roma (IT); STRAFFI, Paolo, I-00151 Roma (IT)
(74) Representative: Bergadano, Mirko
(86) International application number: PCT/IB2010/003175
(87) International publication number: WO 2011/070431

(56) References cited:
- EP-A1- 1 980 587
- WO-A1-95/19385
- WO-A1-2008/006894
- WO-A2-2009/071562
- JP-A- 2001 294 766
- US-A1- 2007 015 853

## Description

### TECHNICAL FIELD

The present invention relates to a method of producing an impermeable rubber layer.

More specifically, the invention relates to an innerliner made from a water-based emulsion, to which the following description refers purely by way of example.

### BACKGROUND ART

As is known, many industrial applications call for increasingly thin impermeable layers, but with no impairment in impermeability.

In the tyre industry, a thinner impermeable layer, known as an innerliner, mainly amounts to using less material, with obvious advantages in terms of output, tyre weight, overall vehicle fuel consumption, and rolling resistance.

Mixes for producing impermeable layers, such as innerliners, are normally made in so-called Banbury mixers, which involves at least two mixing stages: a prolonged, high-temperature first mixing stage, in which the main mix is prepared, and ingredients such as carbon black, zinc oxide, stearic acid, wax, antioxidants, etc. are added and mixed to the polymer base; and a cooler second mixing stage, in which the main mix is completed, and curing agents, such as sulphur, and accelerants and/or retarders are added to the mix from the first stage. The reason the mix is made in two stages is to ensure dispersion of the curing agents at a low enough temperature to avoid premature curing of the mix. The resulting mix is then extruded or calendered into the required shape.

Highly impermeable rubber products are normally made with a butyl rubber matrix.

As is known, rubber can also be made impermeable using fillers which, appropriately mixed, form a steric volume that greatly enhances impermeability. That is, fillers such as clay, kaolin, mica, etc., when mixed with the polymer base, form, in the end product, an obstacle preventing airflow through, and so improving the impermeability of, the product.

Also, any anisotropy of the filler may emphasize the impermeable characteristics of the rubber.

The impermeability of polymer materials to gas or low-molecular-weight substances is known to increase alongside an increase in their glass transition (Tg). A typical example is PET, commonly used in the food industry for packing food and drink. Unfortunately, mechanically combining high-Tg polymers, such as PET, and rubber is often difficult using conventional methods.

Though successful in increasing the impermeability, and so reducing the thickness, of rubber products, the above solutions pose various process problems. Using the conventional Banbury method, mixing a clay-containing polymer base is extremely energy-intensive, and not all the mix ingredients are always effectively blended and/or compatible. Poor blending and/or compatibility of the fillers with the rest of the rubber matrix impairs the mechanical characteristics of the end product; and the above problems are even further compounded when the polymer base comprises high-Tg polymers.

Also to be considered is the extent to which high energy consumption increases the ecological impact and cost of the production process.

Using current methods, there is a limit to the extent to which the thickness of the layers can be reduced. In fact, the mix extrusion and/or calendering stage to form the impermeable layer imposes a thickness threshold that is rarely below 0.5 mm.

The Applicant, however, has surprisingly discovered a method of preparing mixes for impermeable layers, designed to eliminate the drawbacks of the known state of the art. WO 2009/071562 discloses water-based certents comprising the same class of surfactants as the present invention.

### DISCLOSURE OF INVENTION

According to the present invention, there is provided a method of producing impermeable rubber layers as claimed in claim 1.

The aliphatic group R₁ preferably comprises a double bond.

Preferably, Xⁿ⁺ is Na⁺.

The surface-active agent preferably has a molecular formula in the group comprising:

CH₃(CH₂)₇CHCH(CH₂)₇CONHCH₂COO⁻ X⁺;

and

CH₂CH(CH₂)₈CONHCH₂COO⁻ X⁺.

### BEST MODE FOR CARRYING OUT THE INVENTION

The following are purely non-limiting examples to give a clearer understanding of the invention.

### EXAMPLES

The following is a description of mixes produced according to the present invention and characterized by a low permeability index achieved using a polymer base comprising high-Tg polymers in addition to butyl rubber, and/or by using clay.

Each of the mixes was produced by producing a respective water-based emulsion by dispersing and mixing the various mix components in water. Part of the water-based emulsion was then sprayed or brushed onto a substrate, and the water in the emulsion was evaporated.

In the following examples, two different surface-active agents (a, b) in the molecular formula (I) class were used :
- a surface-active agent (a) of molecular formula CH₃(CH₂)₇CHCH (CH₂)₇CONHCH₂COO⁻ Na⁺; and
- a surface-active agent (b) of molecular formula CH₂CH (CH₂)₈CONHCH₂COO⁻ Na⁺.

More specifically, the emulsions were prepared by dispersing all the ingredients in Table I simultaneously in enough water to form a homogeneous emulsion. The resulting aqueous solution was stirred mechanically for 30 minutes, and then sonicated for 15 minutes, to obtain a water-based emulsion.

The above method of producing the water-based emulsions in no way constitutes a limitation of the method according to the present invention.

Table I shows the compositions in phr of four mixes A-D, the Tg values of the respective polymer bases, and the relative permeability indexes calculated. In mixes A-D, the composition of the polymer base was varied by inserting increasingly high Tg polymers.

The permeability values were determined on a 0.3 mm thick mix film sprayed or brushed onto a 1 mm thick supporting layer, and using a conventional apparatus, such as a MOCON OX-TRA (2/20 module), in 0% relative humidity and 30°C temperature conditions.

The permeability values were referred to mix A.

**TABLE I**

| | A | B | C | D |
|---|---|---|---|---|
| Cl-IIR | 100 | 70 | 70 | 70 |
| PMA | -- | 30 | -- | -- |
| PEMA | -- | -- | 30 | -- |
| ABS | -- | -- | -- | 30 |
| CARBON BLACK | 30 | 30 | 30 | 30 |
| RESIN | 10 | 10 | 10 | 10 |
| ZnO | 3 | 3 | 3 | 3 |
| SULPHUR | 2.8 | 2.8 | 2.8 | 2.8 |
| ACCELERANTS | 1.5 | 1.5 | 1.5 | 1.5 |
| SURFACE-ACTIVE AGENT (a) | 2.0 | 2.0 | 2.0 | 2.0 |
| PERMEABILITY INDEX | 100 | 85 | 74 | 52 |

CI-IIR stands for chlorobutyl rubber and has a Tg of - 30°C; PMA for polymethacrylate and has a Tg of 10°C; PEMA for polyethylmethacrylate and has a Tg of 60°C; and ABS for acrylonitrile butadiene styrene thermopolymer, and has a Tg of 110°C.

Each of mixes A-D is prepared by applying, and subsequently evaporating water from, the water-based emulsion obtained by mixing the above respective components in water. The preparation of each water-based emulsion has been calculated to consume roughly 20KWh.

As shown clearly in Table I, this method provides for increasing impermeability using polymers with increasingly high Tg values, but with no increase in energy consumption.

Table II shows the compositions in phr of four mixes E-H made from respective emulsions in accordance with the present invention, and the respective permeability index values calculated. In mixes E-H, clay was inserted in gradually increasing amounts.

The permeability values were referred to mix E and determined in the same way as in Table I.

**TABLE II**

| | E | F | G | H |
|---|---|---|---|---|
| Cl-IIR | 100 | 100 | 100 | 100 |
| CARBONIO BLACK | 30 | 30 | 30 | 30 |
| CLAY | 0 | 30 | 50 | 80 |
| RESIN | 10 | 10 | 10 | 10 |
| ZnO | 3 | 3 | 3 | 3 |
| SULPHUR | 2.8 | 2.8 | 2.8 | 2.8 |
| ACCELERANTS | 1.5 | 1.5 | 1.5 | 1.5 |
| SURFACE-ACTIVE AGENT (b) | 2.0 | 2.0 | 2.0 | 2.0 |
| PERMEABILITY INDEX | 100 | 95 | 90 | 80 |

Each of mixes E-H is prepared by applying, and subsequently evaporating water from, the water-based emulsion obtained by mixing the above respective components in water. The preparation of each water-based emulsion has been calculated to consume roughly 20KWh.

As shown clearly in Table II, the method according to the present invention provides for increasing impermeability using increasing amounts of clay, but with no increase in energy consumption.

The fillers used in the impermeable layer according to the present invention preferably comprise mineral particles of 0.2 to 2 µm diameter, and an aspect ratio of 5 to 30 and preferably 8 to 20, and are preferably in the group comprising kaolin, clay, mica, feldspar, silica, graphite, bentonite and alumina.

The major advantage, with respect to the known state of the art, of the impermeable layers according to the present invention is that they can be made thinner, are more impermeable, and can be made using less energy.

In fact, using a water-based emulsion comprising surface-active agents of molecular formula (I) provides for effective, low-cost dispersion of the components, especially those that are hard to mix using conventional methods, as well as for producing very thin layers, by virtue of the layers being formed directly on the receiving surface, following evaporation of the water in the applied emulsion.

Finally, the impermeable layers according to the present invention also have the advantage of being formed directly upon application, so no long- or short-term storage is required, which may result in deterioration of the rubber.

## Claims

1. A method of producing impermeable rubber layers; said method being **characterized by** comprising:
- a step of preparing a water-based emulsion comprising at least a cross-linkable polymer base comprising at least a polymer with a Tg>0°C, and a surface-active agent of molecular formula (I)
(R₁CONR₂CHR₃COO⁻)n Xⁿ⁺ (I)
where:
R₁ is an aliphatic group C₆-C₂₃,
R₂ is H or an aliphatic group C₁-C₈,
R₃ is H or an aliphatic or aromatic group C₁-C₈,
X is a metal cation, preferably an alkaline cation, and
n is an integer of 1 to 3; and
- a step of depositing said water-based emulsion on a surface.

2. A method of producing impermeable rubber layers as claimed in Claim 1, **characterized in that** said polymer with a Tg > 0°C is comprised in a group comprising polymethacrylate, polyethylmethacrylate and acrylonitrile butadiene styrene thermopolymer.

3. A method of producing impermeable rubber layers; said method being **characterized by** comprising:
- a step of preparing a water-based emulsion comprising at least a cross-linkable polymer base, a mineral filler comprising particles of 0.2 to 2 µm in diameter, and an aspect ratio of 5 to 30, and a surface-active agent of molecular formula (I)
(R₁CONR₂CHR₃COO⁻)n Xⁿ⁺ (I)
where:
R₁ is an aliphatic group C₆-C₂₃,
R₂ is H or an aliphatic group C₁-C₈,
R₃ is H or an aliphatic or aromatic group C₁-C₈,
X is a metal cation, preferably an alkaline cation, and
n is an integer of 1 to 3; and
- a step of depositing said water-based emulsion on a surface.

4. A method of producing impermeable rubber layers as claimed in Claim 3, **characterized in that** said mineral filler comprises particles with an aspect ratio of 8 to 20.

5. A method of producing impermeable rubber layers as claimed in Claim 3 o 4, **characterized in that** said mineral filler is in the group comprising kaolin, clay, mica, feldspar, silica, graphite, bentonite, and alumina.

6. A method of producing impermeable rubber layers as claimed in one of the foregoing Claims, **characterized in that** the aliphatic group R₁ comprises a double bond.

7. A method of producing impermeable rubber layers as claimed in one of the foregoing Claims, **characterized in that** Xⁿ⁺ is Na⁺.

8. A method of producing impermeable rubber layers as claimed in one of the foregoing Claims, **characterized in that** the surface-active agent has a molecular formula in the group comprising:
CH₃(CH₂)₇CHCH(CH₂)₇CONHCH₂COO⁻ X⁺;
and
CH₂CH (CH₂) ₈CONHCH₂COO⁻ X⁺.

9. An impermeable rubber layer, **characterized by** being made using the method as claimed in one of the foregoing Claims.

10. An innerliner, **characterized by** being made from an impermeable rubber layer as claimed in Claim 9.

11. A tyre, **characterized by** comprising an innerliner as claimed in Claim 10.

## Patentansprüche

1. Verfahren zur Herstellung undurchlässiger Gummischichten, wobei das Verfahren **gekennzeichnet ist durch** das Umfassen:
- eines Schritts der Bereitstellung einer wasserbasierten Emulsion umfassend zumindest eine vernetzbare Polymerbasis umfassend zumindest ein Polymer mit einer Tg>0° C, und ein oberflächenaktives Mittel der molekularen Formel (I)
(R₁CONR₂CHR₃COO⁻)n Xⁿ⁺ (I)
wobei:
R₁ eine aliphatische Gruppe C₆ - C₂₃ ist,
R₂ H oder eine aliphatische Gruppe C₁ - C₈ ist,
R₃ H oder eine aliphatische oder aromatische Gruppe C₁ - C₈ ist,
X ein Metallkation, vorzugsweise ein alkalisches Kation ist, und
n eine ganze Zahl von 1 bis 3 ist; und
- eines Schritts des Auftragens der wasserbasierten Emulsion auf eine Oberfläche.

2. Verfahren zur Herstellung undurchlässiger Gummischichten wie es in Anspruch 1 beansprucht, **dadurch gekennzeichnet, dass** das Polymer mit einer Tg > 0°C umfasst ist in einer Gruppe umfassend Polymethacrylat, Polyethylmethacrylat und AcrylnitrilButadien-Styrol Thermopolymer.

3. Verfahren zur Herstellung undurchlässiger Gummischichten, wobei das Verfahren **gekennzeichnet ist durch** das Umfassen:
- eines Schritts der Bereitstellung einer wasserbasierten Emulsion umfassend zumindest eine vernetzbare Polymerbasis, einen mineralischen Füllstoff umfassend Partikel von 0,2 bis 2 µm im Durchmesser und einem Seitenverhältnis von 5 bis 30, und ein oberflächenaktives Mittel der molekularen Formel (I) (R₁CONR₂CHR₃COO⁻)n Xⁿ⁺ (I) wobei:
R₁ eine aliphatische Gruppe C₆ - C₂₃ ist,
R₂ H oder eine aliphatische Gruppe C₁ - C₈ ist,
R₃ H oder eine aliphatische oder aromatische Gruppe C₁ - C₈ ist,
X ein Metallkation, vorzugsweise ein alkalisches Kation ist, und
n eine ganze Zahl von 1 bis 3 ist; und
- eines Schritts des Auftragens der wasserbasierten Emulsion auf eine Oberfläche.

4. Verfahren zur Herstellung undurchlässiger Gummischichten wie es in Anspruch 3 beansprucht ist, **dadurch gekennzeichnet, dass** der mineralische Füllstoff Partikel mit einem Seitenverhältnis von 8 bis 20 umfasst.

5. Verfahren zur Herstellung undurchlässiger Gummischichten wie es in Anspruch 3 oder 4 beansprucht ist, **dadurch gekennzeichnet, dass** der mineralische Füllstoff in der Gruppe umfassend Kaolin, Ton, Glimmer, Feldspat, Kieselerde, Graphit, Bentonit und Tonerde ist.

6. Verfahren zur Herstellung undurchlässiger Gummischichten wie es in einem der vorstehenden Ansprüche beansprucht ist, **dadurch gekennzeichnet, dass** die aliphatische Gruppe R₁ eine Doppelbindung umfasst.

7. Verfahren zur Herstellung undurchlässiger Gummischichten wie es in einem der vorstehenden Ansprüche beansprucht ist, **dadurch gekennzeichnet, dass** Xⁿ⁺ Na+ ist.

8. Verfahren zur Herstellung undurchlässiger Gummischichten wie es in einem der vorgestehenden Ansprüche beansprucht ist, **dadurch gekennzeichnet, dass** das oberflächenaktive Mittel eine molekulare Formel aufweist aus der Gruppe umfassend:
CH₃ (CH₂)₇CHCH(CH₂) ₇CONHCH₂COO⁻ X⁺; und
CH₂CH (CH₂) ₈CONHCH₂COO⁻ X⁺.

9. Undurchlässige Gummischicht, **dadurch gekennzeichnet, dass** sie unter Verwendung des Verfahrens, wie es in einem der vorstehenden Ansprüche beansprucht ist, hergestellt wird.

10. Innerliner, **dadurch gekennzeichnet, dass** er aus einer undurchlässigen Gummischicht, wie sie in Anspruch 9 beansprucht ist, hergestellt ist.

11. Reifen, **gekennzeichnet durch** das Umfassen eines Innerliners, wie er in Anspruch 10 beansprucht ist.

## Revendications

1. Procédé pour la production de couches de caoutchouc imperméables ; ledit procédé étant **caractérisé en ce qu'**il comprend :
- une étape de préparation d'une émulsion aqueuse comprenant au moins une base polymère réticulable comprenant au moins un polymère ayant un Tg > 0°C, et un agent tensioactif de formule moléculaire (I)
(R₁CONR₂CHR₃COO⁻) n Xⁿ⁺ (I)
dans laquelle :
R₁ représente un groupe aliphatique en C₆ à C₂₃ ;
R₂ représente H ou un groupe aliphatique en C₁ à C₈ ;
R₃ représente H ou un groupe aliphatique ou aromatique en C₁ à C₈ ;
X représente un cation métallique, de préférence un cation alcalin, et
n représente un nombre entier de 1 à 3 ; et
- une étape de dépôt de ladite émulsion aqueuse sur une surface.

2. Procédé pour la production de couches de caoutchouc imperméables suivant la revendication 1, **caractérisé en ce que** ledit polymère ayant un Tg > 0°C fait partie d'un groupe comprenant un polyméthacrylate, un polyéthylméthacrylate et un thermopolymère acrylonitrile-butadiène-styrène.

3. Procédé pour la production de couches de caoutchouc imperméables ; ledit procédé étant **caractérisé en ce qu'**il comprend :
- une étape de préparation d'une émulsion aqueuse comprenant au moins une base polymère réticulable, une charge minérale comprenant des particules de 0,2 à 2 µm de diamètre et ayant un rapport d'allongement de 5 à 30, et un agent tensioactif de formule moléculaire (I)
(R₁CONR₂CHR₃COO⁻) n Xⁿ⁺ (I)
dans laquelle :
R₁ représente un groupe aliphatique en C₆ à C₂₃ ;
R₂ représente H ou un groupe aliphatique en C₁ à C₈ ;
R₃ représente H ou un groupe aliphatique ou aromatique en C₁ à C₈ ;
X représente un cation métallique, de préférence un cation alcalin, et
n représente un nombre entier de 1 à 3 ; et
- une étape de dépôt de ladite émulsion aqueuse sur une surface.

4. Procédé pour la production de couches de caoutchouc imperméables suivant la revendication 3, **caractérisé en ce que** ladite charge minérale comprend des particules ayant un rapport d'allongement de 8 à 20.

5. Procédé pour la production de couches de caoutchouc imperméables suivant la revendication 3 ou 4, **caractérisé en ce que** ladite charge minérale fait partie du groupe comprenant le kaolin, une argile, le mica, le feldspath, la silice, le graphite, la bentonite et l'alumine.

6. Procédé pour la production de couches de caoutchouc imperméables suivant l'une des revendications précédentes, **caractérisé en ce que** le groupe aliphatique Rᵢ comprend une double liaison.

7. Procédé pour la production de couches de caoutchouc imperméables suivant l'une des revendications précédentes, **caractérisé en ce que** Xⁿ⁺ représente Na⁺.

8. Procédé pour la production de couches de caoutchouc imperméables suivant l'une des revendications précédentes, **caractérisé en ce que** l'agent tensioactif a une formule moléculaire dans le groupe comprenant :
CH₃(CH₂)₇CHCH(CH₂)₇CONHCH₂COO⁻ X⁺ ;
et
CH₂CH(CH₂)₈CONHCH₂COO⁻ X⁺.

9. Couche de caoutchouc imperméable, **caractérisée en ce qu'**elle est préparée en utilisant le procédé suivant l'une des revendications précédentes.

10. Calandrage intérieur, **caractérisé en ce qu'**il est préparé à partir d'une couche de caoutchouc imperméable suivant la revendication 9.

11. Bandage pneumatique, **caractérisé en ce qu'**il comprend un calandrage intérieur suivant la revendication 10.
